# EUROPEAN PATENT APPLICATION

(11) **EP 2 275 329 A1**
(43) Date of publication of application: **19.01.2011**
(21) Application number: 09165577.9
(22) Date of filing: 15.07.2009
(51) Int. Cl.: B62J 1/16, G09F 7/02

(54) **Child bicycle seat with a plate having a design print**

(71) Applicant: Dremefa B.V., 6983 BM Doesburg (NL)
(72) Inventor: Hagedoorn, Wilhelm Jasper, 6881ML, VELP (NL); Knaven, Franciscus Arnoldus, 7003 BR, DOETINCHEM (NL)
(74) Representative: Houben, Christiaan Hein Willem Frans

(57) **Abstract**

A combination of a child bicycle seat (1) and a plate (6) mountable thereto. The child bicycle seat (1) comprises a seat bucket (2), which has an inner side for supporting a child seated in the seat (1), and an outer side. The seat (1) furthermore comprises fixing means (4) for fixing the seat bucket (2) to a bicycle. The plate (6) is provided with a design print. The plate (6) is mountable on the outer side of the seat bucket (2).

## Description

The present invention relates to a child bicycle seat comprising a seat bucket, which has an inner side for supporting a child seated in the seat, and an outer side, the seat being provided with fixing means for fixing the child seat on a bicycle.

Accessories for bicycles have developed more and more from a pure utility with functional features to a product which is subject to changes in fashion. Nowadays bicycle users want their bicycle, and for example their cyclebag, child bicycle seat and/or windscreen to match with each other. Also a trendy look of these product is more and more a requirement for these products.

For bicycle seats it is known to manufacture the seat buckets in different colors. Also, on the inside of the bucket there may be provided cushion elements with several prints.

In the market are available for instance the child bicycle seats Bobike Mini+, Bobike Maxi and Bobike Maxi+, which are brought on the market by Applicant. These child bicycle seats have a seat bucket made of plastic material with a main color, usually black, white or blue. At the upper end of the armrest portions and of the backrest portions of the seat bucket differently colored parts are attached. Cushion elements are available in a large number of different design prints. The customer can select a seat from a small number of fixed color combinations of the seat bucket and a matching design print of the cushion element.

A disadvantage of the known seats is that the cushion elements which carry the design print, are not visible when the seat is occupied by a child.

The present invention has for an object to provide a child bicycle seat with a more distinguishing appearance.

This object is achieved by a combination of:
- a child bicycle seat comprising a seat bucket, which has an inner side for supporting a child seated in the seat, and an outer side, as well as fixing means for fixing the seat bucket to a bicycle; and
- a plate provided with a design print which is mountable on the outer side of the seat bucket.

The plates can be made in a collection of different design prints. The seat bucket, which may be made in a unitary color, preferably from plastic, can be provided with a trendy design by selecting a plate from the collection and mounting it on the seat bucket.

Preferably the seat buckets and the plates with the design print are delivered as separate parts. The plates may be packaged separately from the seat buckets. Thus the customer can select the design print at the retailer, after which the selected plate can be mounted to the seat bucket at the retailer or at home by the customer himself. This mitigates the problem of a stock of seat buckets which is left because it has an umarketable color combination that has turned out to be less favoured by the public. As the seat bucket is the more complex and more expensive part of the bicycle seat it is favourable to have a unitary seat bucket.

It is also conceivable to manufacture the plates with a customized print. A customer may for instance design his own print and send it via a website to the printer which will produce the customized label. The customized label will then be incorporated in the plate by in-mould labelling.

In a preferred embodiment the plate is made of a plastic material which is manufactured with the design print by in-mould labelling. This has the advantage that a scratch resistant plate is provided where the print in normal use is not damaged.

In another preferred embodiment the plate is provided with the design print by adhereing a sticker, made from plastic, paper material or textile on the outer side of the plate.

In yet another preferred embodiment the design print is printed directly on the plate by means of a transfer printing process.

Preferably the plate is manufactured in a flat fashion and is bendable to fit the shape of the outside of the seat bucket.

In another preferred embodiment the plate is moulded in a curved shape, which is complementary with the curvature of the outer side of the seat bucket.

Preferably the plate is attached to the seat bucket by means of a snap connection. This has the advantage that the plate can be mounted to the seat bucket without the use of tools.

In a further preferred embodiment the outer side of the seat bucket is provided with a recessed area with a certain contour and wherein the plate has a contour which is complementary with the contour of the recessed area, wherein preferably the plate in the mounted state lies within the recessed area such that the outer surface of the plate lies flush with respect to the adjacent portion(s) of the outer side of the seat bucket. This provides a neat and smooth look to the seat bucket.

The invention also relates to a child bicycle seat comprising a seat bucket, which has an inner side for supporting a child seated in the seat, and an outer side, the seat being provided with fixing means for fixing the child seat on a bicycle, **characterized in that** at least one plate provided with a design print is attached to the outer side of the seat bucket.

The invention furthermore relates to a method for manufacturing a child bicycle seat comprising the following steps:
- manufacturing a seat bucket comprising plastic material;
- manufacturing a plastic plate provided with a design print;
wherein, preferably, the plate with the design print is manufactured by printing a label with a certain design and incorporating this label in the plastic plate by in-mould labelling.

Preferably, in the method, plastic plates with different design prints are manufactured, wherein a plate with a certain design print is selected from the different plastic plates, and wherein the selected plate is mounted to the seat bucket.

The invention will be described in more detail with reference to the drawing, in which:
Fig. 1 shows a view in perspective, partly from behind, of child bicycle seat with a seat bucket of a combination according to the invention,
Fig. 2 shows another view from the rear of the seat bucket of Fig. 1,
Fig. 3 shows a view in perspective a plate with a design print of a combination according to the invention, and
Fig. 4 illustrates the combination of a seat bucket and a plate with a design print during mounting.

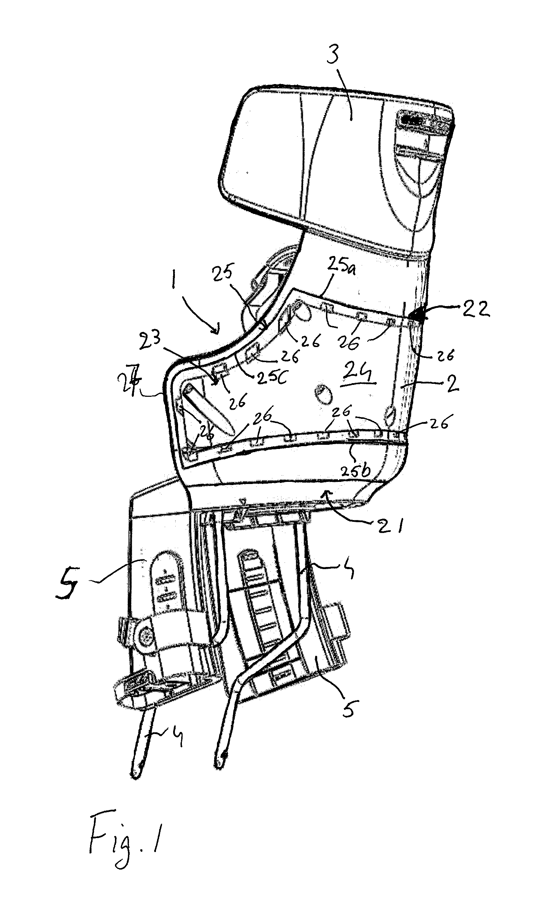

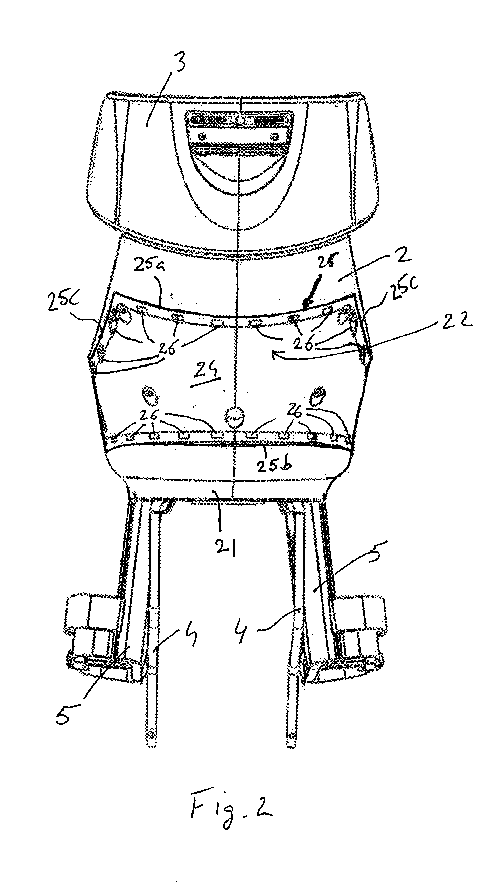

In Figs. 1 and 2 is shown a child bicycle seat 1 comprising a seat bucket 2. The figures 1 and 2 show the outer side of the seat bucket 2. The outer side of the seat bucket 2 is convexely curved as can be clearly seen in Figs. 1 and 2. The inner side of the seat bucket 2, which is not visible in the figures, supports the child when seated in the seat 1. The seat bucket 2 is constituted mainly by one or more plastic shell parts, e.g. made from PP, by means of an injection moulding process. In the exemplary embodiment shown in the figure the seat 1 is provided with a height adjustable headrest portion 3. However, the present invention relates also to child bicycle seats wherein the seat is not provided with an adjustable headrest portion.

The specific embodiment of the seat 1 shown in the figures is provided with coupling rods 4 for fixing the child bicycle seat 1 to a bicycle. The specific fixing means for fixing the seat 1 to the bicycle are not material to the present invention and therefore the rods 4 may be replaced by other suitable fixing means.

In the specific embodiment of the seat 1 shown in the Figure, the seat comprises foot rest portions 5 for supporting the feet of the child and preventing it from touching the spokes or other parts of the bicycle wheel. The specific configuration of the footrests is not material to the present invention and can be replaced by other foot rest portions.

The seat bucket 2 has a seat portion 21, a backrest portion 22 and two side portions 23, of which side portions in Fig. 1 only one is visible.

On the outer side of the seat bucket 2 a recessed area 24 is provided, which recessed area 24 extends over a large part of the outer side of the backrest portion 22 and over the outer side of the side portions 23 of the seat bucket 2. The recessed area 24 has a perimeter 25 which is constituted by an upper perimeter portion 25a, a lower perimeter portion 25b and side perimeter portions 25c. Each side perimeter portion 25c extends substantially parallel to the front edge 27 of the seat bucket 2 on the side concerned. The upper and lower perimeter portions 25a and 25b extend from one side of the seat bucket 2 to adjoint the side perimeter portions 25c. The perimeter 25 of the recessed area 24 defines the contour of the recessed area 24, which in the specific embodiment shown is substantially hexagonal.

Spread along the perimeter 25 of the recessed area 24 are provided apertures 26, the function of which will be described further on in the description.

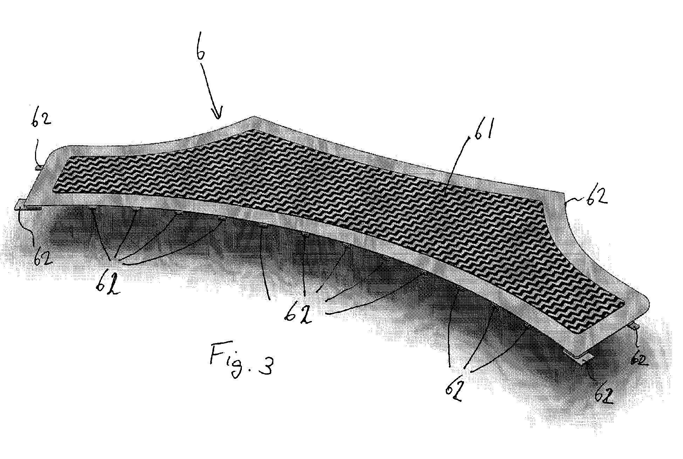

In Fig. 3 a plastic plate 6 is shown with a printed label 61 incorporated in it. By way of example a sawtooth pattern is printed on the label 61 in Fig. 3, but is should be clear to a person skilled in the art that any desired print design can be printed on the label 61. The plate 61 is manufactured by in-mould labelling process. In-mould labelling as such is a process known in the art. In the in-mould labelling label 61 after it is printed is placed in a mould after which the mould can be filled with a plastic resin.

Preferably the label is made of the same material as the plate 6. In particular it is envisaged to make the label of PP and print the design print on the label. Next, the label is placed in a mould which is filled with PP resin, which then merges with the material of the label such that it becomes an integral unit.

The plate 6 in Fig. 3 is shown in a flat state which is the initial state after it has been produced by the in-mould labelling process. In the specific embodiment shown, the flat plate has a generally hexagonal shape.

Spread along the perimeter of the plate 6 are provided lips 62, which fit in the apertures 26 on the perimeter of the recessed area 24 of the seat bucket 2.

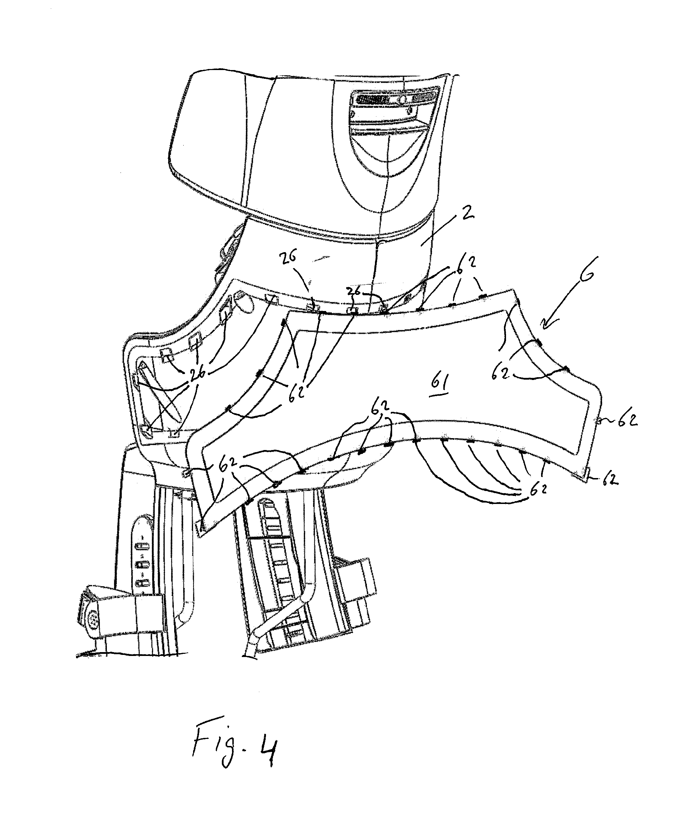

In Fig. 4 is illustrated how the plate 6 is mounted as a back plate on the outer side of the seat bucket 2. The plate 6 is flexible and can be bended such that the plate 6 obtains a curved shape and fits on the curved surface of the outer side of the seat bucket 2. The contour of the outer perimeter of the plate 6 is complementary with the contour of the recessed area 24 , when the plate 6 is bended to a curvature complementary to the curvature of the outer side of the seat bucket 2. The lips 62 on the perimeter of the plate 6 are inserted into the apertures 26 in the perimeter of the recessed area 24, and the lips 62 and apertures 26 cooperate to secure the plate to the seat bucket 2. The lips 62 and apertures form a snap connection which allows an easy and quick to perform mounting of the plate 6 on the seat bucket 2 without the need to use specific tools.

When the plate 6 is mounted to the seat bucket 2, the outer side of the plate 6 lies preferably flush with the outer side of the seat bucket 2 so as to provide a slim and nice look. It is however not necessary to have the plate 6 lying totally flush with outer side of the bucket 2. The plate may for example also extend a little beyond the surface of the outer side of the seat bucket 2. Alternatively, the outer side of the plate 6 may lie recessed with respect to the surface of the outer side of the seat bucket 2. Also combinations of flush lying, slightly protruding or slightly recessed portions of the plate with respect to the surrounding outer side portions of the seat bucket 2 are possible.

Whereas it is preferred to manufacture a flexible plate which can be bended to fit in the contour of the recessed area, it is also contemplated that the plate is manufactured, e.g. by injection moulding with in-mould labelling, in a rigid shape, which is complementary with the recessed area 24 of the seat bucket 2. Also the plate can be injection moulded in the rigid shape, after which the design print is provided on the curved outer surface thereof by means by for example transfer printing.

Alternative to the snap connection with the lips 62 and apertures 26, the plate 6 can also be attached to the seat bucket 2 with other attachment means. For example the plate 6 can be fixed to the seat bucket 2 by means of an adhesive. Also an attachment by means of screws or other mechanical attachment elements is possible.

Whereas it is preferred to manufacture the plate 6 from plastic material it is also possible to manufacture the plate from another suitable material, for example a metal.

It is noted that the invention is not limited to the specific embodiment shown in the drawing. The embodiments shown serve as an example. Modifications and variations are readily conceivable by a person skilled in the art and must be considered to fall within the scope of the invention.

## Claims

1. In combination:
- a child bicycle seat (1) comprising a seat bucket (2), which has an inner side for supporting a child seated in the seat, and an outer side, as well as fixing means (4) for fixing the seat bucket (2) to a bicycle; and
- a plate (6) provided with a design print, which plate (6) is mountable on the outer side of the seat bucket (2).

2. Combination according to claim 1, wherein the plate (6) is made of a plastic material, preferably PP.

3. Combination according to claim 2, wherein the plate (6) with the design print is manufactured by in-mould labelling.

4. Combination according to any one of the preceding claims, wherein the plate (6) is bendable.

5. Combination according to any one of the preceding claims, wherein the plate (6) is attachable to the seat bucket (2) by means of a snap connection.

6. Combination according to any one of the preceding claims, wherein the outer side of the seat bucket (2) is provided with a recessed area (24) with a certain contour and wherein the plate (6) has a contour which is complementary with the contour of the recessed area (24).

7. Combination according to claim 6, wherein the plate (6) in a mounted state lies within the recessed area (24) such that the outer surface of the plate (6) lies flush with respect to the adjacent portion(s) of the outer side of the seat bucket (2).

8. Combination according to claim 6 or 7, wherein the recessed area (24) has a perimeter portion which is provided with first attachment means (26) and wherein the plate (6) has a perimeter portion which is provided with second attachment means (62) adapted to cooperate with the first attachment means (26) for attaching the plate (6) to the seat bucket (2), wherein, preferably, the first attachment means comprise apertures (26) and the second attachment means comprise lips (62) provided at the perimeter portion of the plate (6), which lips (62) fit in said apertures (26).

9. Combination according to any one of the preceding claims, wherein the seat bucket (2) comprises plastic material, preferably PP.

10. Combination according to any one of the preceding claims, wherein the plate (6) in a mounted state is releasable from the seat bucket (2).

11. Combination according to claim 1, wherein the plate (6) is packaged separately from the seat bucket (2).

12. Child bicycle seat comprising a seat bucket (2), which has an inner side for supporting a child seated in the seat, and an outer side, the seat being provided with fixing means (4) for fixing the child seat on a bicycle, **characterized in that** at least one plate (6) provided with a design print is attached to the outer side of the seat bucket (2).

13. Method for manufacturing the combination of claim 1 comprising the following steps:
- manufacturing a seat bucket (2) comprising plastic material;
- manufacturing a plastic plate (6) provided with a design print.

14. Method according to claim 13, wherein the plate (6) with the design print is manufactured by printing a label (61) with a certain design and incorporating this label (61) in the plastic plate (6) by in-mould labelling.

15. Method according to claim 13 or 14, wherein a collection of plastic plates (6) with different design prints is manufactured, wherein a plate (6) with a certain design print is selected from the collection of different plastic plates (6), which selected plate (6) is mountable to the seat bucket (2).
